# EUROPÄISCHE PATENTANMELDUNG

(11) **EP 2 468 503 A1**
(43) Veröffentlichungstag der Anmeldung: **27.06.2012**
(21) Anmeldenummer: 11186701.6
(22) Anmeldetag: 26.10.2011
(51) Int. Cl.: B32B 37/06, H05B 3/00

(54) **Laminiergerät**

(30) Priorität: 22.12.2010 DE 202010016855 U
(71) Anmelder: Monolith GmbH Bürosysteme, 45127 Essen (DE)
(72) Erfinder: Loibl, Bernd, 79771 Klettgau (DE)
(74) Vertreter: Albrecht, Ralf

(57) **Zusammenfassung**

Dargestellt und beschrieben ist ein Laminiergerät (1) zum Heißlaminieren von Blattgut und Laminierfolie, mit einem Gerätegehäuse (2), durch das ein Durchlaufkanal (8) für den Durchlauf einer Kombination von Blattgut und Laminierfolie geht, in dem zumindest eine Laminiereinheit (11) mit einem Paar gegenüber liegender, einen Laminierspalt (14) frei lassender Laminierwalzen (12, 13) angeordnet ist, wobei sich durch wenigstens eine der beiden ein Paar bildenden Laminierwalzen (12, 13) ein Widerstandsheizstab (25) axial erstreckt, wobei der Widerstandsheizstab als PTC-Heizstab (25) ausgebildet ist und der PTC-Heizstab (25) gerätefest fixiert ist, wobei die jeweils zugehörige Laminierwalze (12) gegenüber dem PTC-Heizstab (25) verdrehbar gelagert ist.

## Beschreibung

Die Erfindung betrifft ein Laminiergerät zum Heißlaminieren von Blattgut und Laminierfolie, mit einem Gerätegehäuse, durch das ein Durchlaufkanal für den Durchlauf einer Kombination von Blattgut und Laminierfolie geht, in dem zumindest eine Laminiereinheit mit einem Paar gegenüber liegender, einen Laminierspalt freilassender Laminierwalzen angeordnet ist, wobei sich durch wenigstens eine der beiden ein Paar bildenden Laminierwalzen ein Widerstandsheizstab axial erstreckt.

Zum Schutz von Blattgut, insbesondere von wertvollen Dokumenten, ist es bekannt, das Blattgut mit einer Laminierfolie zu verschweißen. Dabei wird das Blattgut zwischen zwei eine Laminierfolie bildenden Folienblättern gelegt, die dann gemeinsam durch ein Laminiergerät transportiert werden. Die Folienblätter können auch in Form einer Laminierfolientasche vorliegen, bei denen die beiden Folienblätter an zumindest einer Seitenkante miteinander verbunden sind. Solche Laminierfolien sind beispielsweise aus der DE 201 00 328 U1 bekannt. Charakteristisch für Laminierfolien ist, dass sie als Verbundfolien ausgebildet sind, bei denen eine durchsichtige, klare Folie aus z.B. Polyethylen oder Polypropylen innenseitig mit einer wärmeempfindlichen Klebstoffschicht versehen ist, welche beispielsweise aus EVA (EthylenVinylacetat-Copolymer) besteht.

Im nicht-industriellen Bereich, d.h. im Büro- und Privatbereich werden in der Regel als Tischgeräte ausgebildete Laminiergeräte eingesetzt. Solche Laminiergeräte sind beispielsweise aus der DE 20 2009 000 903 U1 bekannt. Sie haben im Wesentlichen den gleichen Aufbau, d.h. ein Gerätegehäuse, in dem eine Laminiereinheit angeordnet ist. Zwischen einer Zuführöffnung auf einer Seite und einer Austrittsöffnung auf der anderen Seite des Gerätegehäuses erstreckt sich ein Durchlaufkanal, dem die Laminiereinheit zugeordnet ist. Letztere weist in der Regel ein Walzenpaar auf, teilweise auch mehrere Walzenpaare, die aus jeweils zwei übereinander angeordneten, einen Laminierspalt ausbildenden Laminierwalzen bestehen. Dabei ist der Laminierspalt so eingestellt, dass die Kombination aus Blattgut und Laminierfolie in dem Laminierspalt einem erheblichen Druck ausgesetzt wird.

Bei Heißlaminiergeräten ist zumindest eine der Laminierwalzen, in der Regel beide, beheizt. Beim Durchlauf einer Kombination aus Blattgut und Laminierfolie wird diese Kombination also in dem Laminierspalt zusätzlich erhitzt. Dies macht die Klebstoffschicht der Laminierfolie klebfähig und sorgt für eine Verbindung der Folienblätter untereinander und mit dem zu verschweißenden Blattgut. Die Temperatur beim Heißlaminieren ist dabei so eingestellt, dass der Teil der Folienblätter, der aus der klaren Folie besteht, durch die Hitzeeinwirkung nicht beeinträchtigt wird.

Für die Beheizung der Laminierwalzen sind verschiedene Systeme bekannt. Bei einem gattungsgemäßen Laminiergerät erfolgt die Beheizung mittels Widerstandsheizstäben, die in die als Hohlwalzen ausgebildeten Laminierwalzen eingesteckt sind und sich darin axial erstrecken. Da sie in den Laminierwalzen fixiert sind, besteht zwar ein guter Wärmeübergang zur Außenfläche der Laminierwalzen und damit auch die zu verschweißenden Laminierfolien. Von Nachteil ist jedoch, dass der elektrische Strom über Schleifkontakte übertragen werden muss, die nicht nur Verluste erzeugen, sondern auch eine Funkenschutzeinrichtung benötigen. Hinzu kommt, dass die üblichen Widerstandsheizstäbe zum Verspröden neigen und deshalb bruchempfindlich sind und dass sie eine aufwendige Temperaturregelung mit Überhitzungsschutz erfordern. Außerdem ist der Stromverbrauch sowohl beim Kaltstart als auch während des Laminierens relativ hoch.

Der Erfindung liegt die Aufgabe zugrunde, bei einem Laminiergerät der eingangs genannten Art eine einfachere und sicherere Beheizung der Laminierwalzen vorzusehen.

Diese Aufgabe wird erfindungsgemäß dadurch gelöst, dass der Widerstandsheizstab als PTC-Heizstab ausgebildet und der PTC-Heizstab gerätefest fixiert ist, wobei die jeweils zugehörige Laminierwalze gegenüber dem PTC-Heizstab verdrehbar gelagert ist. Grundgedanke der Erfindung ist die Kombination einer gerätefesten Anordnung des Widerstandsheizstabes mit dessen Ausbildung als PTC-Heizstab. Ein solcher Heizstab hat einen positiven Temperaturkoeffizient, bei dem der elektrische Widerstand sich bei steigender Temperatur vergrößert.

Eine solche Beheizung der Laminierwalzen hat erhebliche Vorteile. Aufgrund ihres Temperatur-Widerstandsverhaltens sinkt die erzeugte Wärmeleistung bei steigender Temperatur, d.h. der PTC-Heizstab regelt sich selber auf einer bestimmten Temperatur, ohne dass es hierzu einer externen Regelung bedarf. Außerdem kann aufgrund dieses Verhaltens ein Überhitzungsschutz entfallen. PTC-Heizstäbe benötigen nicht die Verwendung schwer entflammbaren Materials, das teuer und umweltproblematisch ist. Auch ein Transformator ist nicht erforderlich, da solche Heizstäbe bei einer Spannung sowohl von 110 V als auch von 220 V arbeiten. PTC-Heizstäbe zeichnen sich zudem durch hohe Lebensdauer aus und haben einen wesentlich geringeren Stromverbrauch sowohl beim Kaltstart als auch beim Laminiervorgang selbst. Ein weiterer Vorteil besteht darin, dass verschieden dicke Laminierfolien mit derselben Temperatur laminiert werden können, da der PTC-Heizstab die Wärmeenergie entsprechend dem Wärmebedarf regelt, d.h. bei dünnerer Folie wird weniger Wärmeenergie als bei einer dickeren Folie zur Verfügung gestellt, ohne dass es hierfür einer besonderen Regelung bedarf. Schließlich kann der PTC-Heizstab aufgrund seiner gerätefesten Fixierung direkt mit Anschlusskabeln für die elektrische Energiezuführung verbunden werden. Die Nachteile einer Schleifringzuführung entfallen damit.

In Ausbildung der Erfindung ist vorgesehen, dass der PTC-Heizstab aus Keramik mit Bariumnitrat als Grundmaterial besteht. Er sollte beidseitig mit über dessen Länge sich erstreckenden Flachelektroden versehen sein.

Da keine wärmeleitende Verbindung zwischen PTC-Heizstab und Laminierwalzen besteht, ist der Wärmeübergang nicht so gut wie bei Fixierung des Heizstabes in der Laminierwalze. Es werden jedoch gute Wärmeübergangswerte erzielt, wenn der Abstand zwischen PTC-Heizstab möglichst gering ist, vorzugsweise 0,5 bis 1 mm beträgt.

Die erfindungsgemäßen Vorteile werden schon dann erzielt, wenn nur eine der beiden ein Paar bildenden Laminierwalzen in erfindungsgemäßer Weise mit einem PTC-Heizstab versehen ist. Zweckmäßigerweise sind aber beide Laminierwalzen so ausgestattet, so dass jede Laminierwalze mit einem gerätefest fixierten PTC-Heizstab versehen ist. Es versteht sich, dass auch mehrere Paare von Laminierwalzen vorhanden sein können, die dann in gleicher Weise mit PTC-Heizstäben ausgerüstet sind.

In der Zeichnung ist die Erfindung anhand eines Ausführungsbeispiels näher veranschaulicht. Es zeigen:
- Figur 1: eine Schrägansicht der Rückseite des erfindungsgemäßen Laminiergeräts;
- Figur 2: das Laminiergerät gemäß Figur 1 im Querschnitt;
- Figur 3: eine Schrägansicht einer Laminierwalze des Laminiergeräts gemäß den Figuren 1 und 2 mit PTC-Heizstab;
- Figur 4: eine Stirnseitenansicht der Laminierwalze gemäß Figur 3 und
- Figur 5: einen Längsschnitt durch die Laminierwalze gemäß den Figuren 3 und 4.

Das in der Zeichnung dargestellte Laminiergerät 1 hat ein Gehäuse 2 mit einem ebenen Gehäuseboden 3, einer Frontwandung 4, einer Rückwandung 5 und einer die Frontwandung 4 und die Rückwandung 5 verbindenden, bogenförmigen Oberwandung 6. Letztere ist mit einer Vielzahl von Kühlschlitzen - beispielhaft mit 7 bezeichnet - versehen. Von der Rückwandung 5 zur Frontwandung 4 erstreckt sich durch das Gehäuse 2 ein schräg abwärts gerichteter Durchlaufkanal 8 in einer solchen Breite, dass DIN A4-Blattgut querformatig durchgeleitet werden kann. Der Durchlaufkanal 8 wird eingangsseitig durch eine Zuführöffnung 9 in der Rückwandung 5 und einer Austrittsöffnung 10 in der Frontwandung 4 begrenzt.

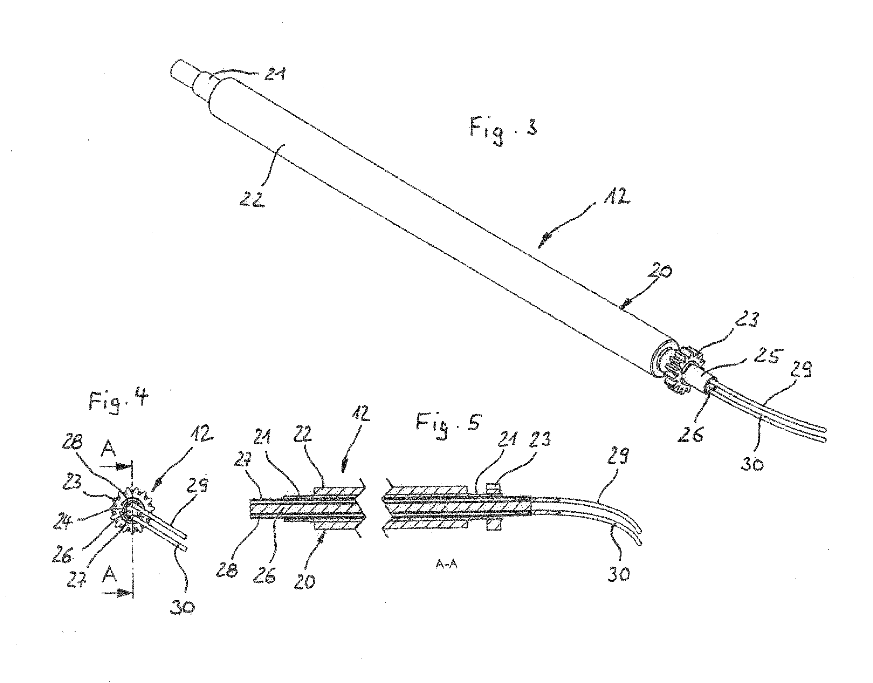

Etwa in der Mitte des Durchlaufkanals 8 befindet sich eine Laminiereinheit 11, von der hier zwei übereinander mit ihren Drehachsen parallel zueinander angeordnete Laminierwalzen 12, 13 zu sehen sind. Die Laminierwalzen 12, 13 erstrecken sich über die gesamte Breite des Durchlaufkanals 8 und bilden zwischen sich einen Laminierspalt 14 aus. Die Laminierwalzen 12, 13 sind - was in den Figuren 3 bis 5 noch näher erläutert wird ― beiheizt. Sie sind auch Teil einer Transporteinrichtung, zu der ein elektormotorischer, hier nicht näher dargestellter Antrieb gehört, der die beiden Laminierwalzen 12, 13 beim Laminiervorgang synchron antreibt, und zwar die obere Laminierwalze 12 im Uhrzeigersinn und die untere Laminierwalze 13 entgegen dem Uhrzeigersinn. Ihre Umfangsgeschwindigkeiten sind identisch.

An der Rückwandung 5 angebracht ist eine Blattauflage 15, deren Oberseite 16 sich bündig an die Unterseite des Durchlaufkanals 8 anschließt und in der gleichen Richtung geneigt ist wie der Durchlaufkanal 8 selbst. Benachbart zur Zuführöffnung 9 ragen über die Oberseite 16 der Blattauflage 15 hinaus zwei Führungsstege 17, 18, die sich gegenüberstehen und die aufgrund mechanischer Kupplung gegensinnig in der Weise bewegbar sind, dass sich bei einer Verstellung die Mitte des Abstandes zwischen den beiden nicht verlagert. Der Abstand der Führungsstege 17, 18 ist auf diese Weise an das Format der jeweils zu laminierenden Kombination aus Laminierfolie und Blattgut so anpassbar, dass beide Seitenränder dieser Kombination beim Einführen in den Durchlaufkanal 8 durch die Führungsstege 17, 18 geführt werden und die Laminierfolie zentrisch in den Durchlaufkanal 8 einläuft.

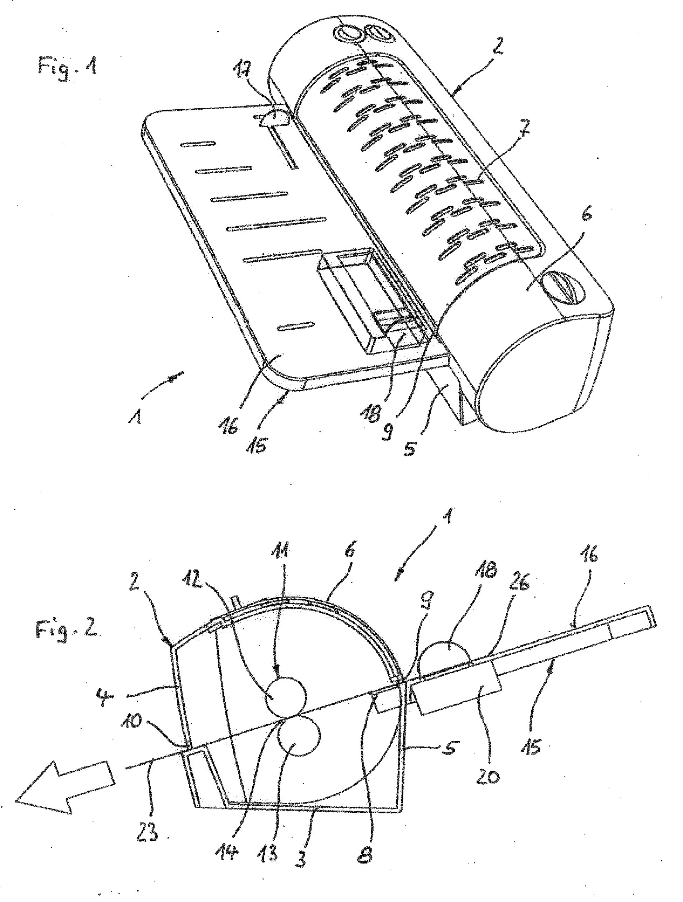

Die in den Figuren 3 bis 5 dargestellte, aus dem Laminiergerät 1 isolierte Laminierwalze 12 ist als Hohlwalze 20 ausgebildet, welche aus einer metallischen Walzenhülse 21 und einem darauf aufgebrachten, aus Silikon bestehenden Walzenbezug 22 besteht. Die Walzenhülse 21 ist in hier nicht näher dargestellten Lagern innerhalb des Laminiergerätes 1 drehbar gelagert. An einem Ende ist die Walzenhülse 21 mit einem Stirnzahnrad 23 drehfest verbunden. Über dieses Stirnzahnrad 23 kann die Laminierwalze 12 in der oben beschriebenen Drehrichtung angetrieben werden. Die andere Laminierwalze 13 (Figur 2) hat ebenfalls ein solches Stirnzahnrad, das mit dem Stirnzahnrad 23 der Laminierwalze 12 kämmt. Der Antrieb erfolgt über einen Elektromotor.

Die Hohlwalze 20 umgibt einen im Querschnitt kreisrunden Hohlraum 24, in die ein PTC-Heizstab 25 hineinragt. Der PTC-Heizstab 25 hat einen Stabkern 26 aus einem Material, das PTC-Verhalten hat. Vorzugsweise wird als Grundmaterial Bariumtitanat verwendet. Der Stabkern 26 hat rechteckigen Querschnitt und ist an der Ober- und Unterseite mit sich über die Länge des Stabkerns 26 erstreckende Metallelektroden 27, 28 beschichtet. Diese sind mit Isoliermaterial abgedeckt und an der Seite, an der sich auch das Stirnzahnrad 23 befindet, mit Elektroleitungen 29, 30 zwecks Zufuhr von elektrischer Energie verbunden.

Der PTC-Heizstab 25 ist in dem Laminiergerät 1 gerätefest gehalten, d.h. bei einem Laminiervorgang wird nur die Hohlwalze 20 in Drehbewegung versetzt, während der PTC-Heizstab 25 sich nicht mitbewegt, also seine Lage in Bezug auf das Gehäuse 2 beibehält. Der Wärmeübergang zwischen PTC-Heizstab 25 und Hohlwalze 20 geschieht über den zwischen beiden vorhandenen Luftspalt.

## Patentansprüche

1. Laminiergerät (1) zum Heißlaminieren von Blattgut und Laminierfolie, mit einem Gerätegehäuse (2), durch das ein Durchlaufkanal (8) für den Durchlauf einer Kombination von Blattgut und Laminierfolie geht, in dem zumindest eine Laminiereinheit (11) mit einem Paar gegenüber liegender, einen Laminierspalt (14) frei lassender Laminierwalzen (12, 13) angeordnet ist, wobei sich durch wenigstens eine der beiden ein Paar bildenden Laminierwalzen (12, 13) ein Widerstandsheizstab (25) axial erstreckt, **dadurch gekennzeichnet, dass** der Widerstandsheizstab als PTC-Heizstab (25) ausgebildet ist und der PTC-Heizstab (25) gerätefest fixiert ist, wobei die jeweils zugehörige Laminierwalze (12) gegenüber dem PTC-Heizstab (25) verdrehbar gelagert ist.

2. Laminiergerät nach Anspruch 1, **dadurch gekennzeichnet, dass** der PTC-Heizstab (25) aus Keramik mit Bariumnitrat als Grundmaterial besteht.

3. Laminiergerät nach Anspruch 1 oder 2, **dadurch gekennzeichnet, dass** der PTC-Heizstab (25) beidseitig mit über dessen Länge sich erstreckenden Flachelektroden (27, 28) versehen ist.

4. Laminiergerät nach einem der Ansprüche 1 bis 3, **dadurch gekennzeichnet, dass** der PTC-Heizstab (25) zur Innenseite der zugehörigen Laminierwalze (12) einen Abstand von 0,5 bis 1 mm hat.

5. Laminiergerät nach einem der Ansprüche 1 bis 4, **dadurch gekennzeichnet, dass** beide ein Paar bildenden Laminierwalzen (12, 13) mit PTC-Heizstäben (25) versehen sind.
